Europäisches Patentamt

European Patent Office

Office européen des brevets

(19)

(11) Publication number : **0 426 222 B1**

## (12) EUROPEAN PATENT SPECIFICATION

(45) Date of publication of patent specification :
**19.01.94 Bulletin 94/03**

(21) Application number : **90202737.4**

(22) Date of filing : **15.10.90**

(51) Int. CI.$^5$ : **H01S 3/06,** H04B 10/12,
**H01S 3/17**

(54) **Active fiber optical amplifier having a wide band signal wavelength.**

(30) Priority : **30.10.89 IT 2219789**

(43) Date of publication of application :
**08.05.91 Bulletin 91/19**

(45) Publication of the grant of the patent :
**19.01.94 Bulletin 94/03**

(84) Designated Contracting States :
**AT BE CH DE DK ES FR GB IT LI LU NL SE**

(56) References cited :
**ELECTRONICS LETTERS. vol. 25, no. 14, July
6, 1989, STEVENHAGE GB pages 910 - 911; C.
G. ATKINS ET AL.: 'High-gain, broad spectral
bandwidth erbium-doped fibre amplifier pum-
ped near 1.5 mum '
JOURNAL OF APPLIED PHYSICS. vol. 64, no.
2, July 15, 1988, NEW YORK US pages 516 -
520; Y. KIMURA ET AL.: 'Lasing character-
istics of Er3+ doped silica fibers from 1553
mum to 1603 mum '**

(56) References cited :
**JOURNAL OF LIGHTWAVE TECHNOLOGY.
vol. 6, no. 2, February 1988, NEW YORK US
pages 287 - 293; B. J. AINSLIE ET AL.: 'The
absorption and fluorescence spectra of rare
earth ions in silica-based monomode fiber '**

(73) Proprietor : **PIRELLI CAVI S.p.A.
Piazzale Cadorna, 5
I-20123 Milano (IT)**

(72) Inventor : **Grasso, Giorgio
Via Canesi, 8
I-20052 Monza (Milano) (IT)
Inventor : Righetti, Aldo
Via Tolstoi, 49
I-20146 Milano (IT)
Inventor : Fontana, Flavio
Via Clerici, 14
I-20032 Cormano (Milano) (IT)**

(74) Representative : **Marchi, Massimo et al
c/o Marchi & Mittler s.r.l. Viale Lombardia 20
I-20131 Milano (IT)**

EP 0 426 222 B1

## Description

The present invention refers to an optical fiber containing doping substances, adapted to modify its characteristics of stimulated luminous emission and of absorption at different wavelength.

It is known that optical fibres in which the core is doped with particular substances, for example rare-earth ions, have stimulated emission characteristics adapted to be used as laser sources and as optical amplifier.

In fact, these fibres can be supplied with a luminous source at a particular wavelength, which is capable of bringing the doping substance atoms to an excited energetic state, or pumping band, from which the atoms spontaneously decay in a very short time to a laser emission state, in which state they stand for a relatively longer time.

When a fiber having a high number of atoms excited in the emission level is crossed by a luminous signal with a wavelength corresponding to such laser emission state, the luminous signal causes the transition of the excited atoms to a lower level and the light emission has the same wavelength as the signal; therefore a fiber of this kind can be used to obtain an optical signal amplification.

Starting from the excited state, the atom decay can occur also spontaneously, which gives rise to a random emission constituting a "background noise" overlapping the stimulated emission, corresponding to the amplified signal.

These phenomena take place at several wavelengths, typical of the doping substance, so as to give origin to a fluorescence spectrum. In order to obtain the maximum signal amplification by means of a fiber of the above type, together with a high signal-to-noise ratio, it is normally used a signal with a wavelength corresponding to a maximum of the fluorescence spectrum curve of the fiber incorporating the doping substance used; this signal is properly generated by a laser emitter.

For example, it can be used as an amplifying fiber a fiber whose core is doped with aluminium ions ($Al^{3+}$) and erbium ions ($Er^{3+}$), as described in the British Patent Application n. 8813769; however the erbium fluorescence spectrum, in the range of the concerned wavelengths, has a particularly narrow emission peak which dictates the use as a transmission signal source of a laser emitter operating to a well defined wavelength with a limited tolerance, because signals exceeding such tolerance would not be properly amplified, while at the same time a strong amplification of the background noise would occur at this wavelength.

However, laser emitters having the above features are of difficult and expensive production, whereas the common industrial production of these devices has a rather large tolerance as regards the emission wavelength.

While in some applications, such as for example submarine telecommunication lines, could be used transmission signal emitters operating at the right wavelength, for example obtained through an accurate selection from commercially available lasers, so as to use only those having an emission strictly close to the laser emission peak of the amplifier fiber, this procedure is not acceptable from an economical point of view when other kinds of lines are concerned such as for example municipal communication lines, when it is of great importance to limit the installation costs.

For example, a fiber according to the above Patent having been doped with aluminium ions for modifying the index of refraction and with erbium ions to allow the laser emission, has an emission peak of about 1,531 nm, that for a range of ± 5 nm from this value shows a high intensity and could be used for the amplification; therefore for operating with this optical fiber, it is better to use a signal in the same wavelength range; however commercially available semiconductor laser, which could be suited for the use, are usually made with emission wavelength values in the range of 1,520 to 1,570 nm.

As a result, a great number of commercially available lasers are at the outside of the desired range and therefore cannot generate a signal adapted to be properly amplified.

On the other hand, it is known that erbium-doped fibres have an area in the emission spectrum with a high and substantially constant intensity in the wavelength range contiguous to the above described peak and comprising the signal range of the above mentioned commercially available lasers; however in this optical fiber a signal supplied to a wavelength removed from the maximum of the emission peak would be amplified in a reduced measure, whereas spontaneous transitions from the laser emission state in the fiber mainly take place with the emission at the wavelength of the spectrum peak, at 1,531 nm, thus generating a "background noise" which will be further amplified through the fiber length and will overlap the useful signal.

It may be envisaged to carry out the filtering of the luminous emission constituting "the noise" at the end of the amplifier. accepting therefore the only wavelength of the signal, for the purpose providing a suitable filter at the end of the active fiber; however the presence of an undesired emission in the fiber in the range of the fiber maximum amplification, would subtract pumping energy, thus making the fiber substantially inactive as regards the signal amplification itself.

Interfering filters are also known, which can be disposed at different location along the amplification fiber, but known filters of this kind are formed by discrete components, not made of fiber and therefore need light beams in the air, which makes them unsuitable for industrial application.

The problem arises therefore of providing an active optical fiber to be employed in optical amplifiers which is adapted to be used together with commercially available lasers for the emission of the transmission signal without further restrictions.

The present invention aims at providing a doped optical fiber capable of offering a satisfactory amplification in a sufficiently wide wavelength range, so as to allow the use of commercially available lasers, while preventing the spontaneous emissions of the material to an undesired wavelength from impairing the amplification capability of the fiber and constituting a background noise of great intensity with respect to the transmission signal.

It is an object of the present invention an optical fiber comprising laser emitting substances in particular for the use in optical fiber telecommunication lines, containing erbium as laser emitting doping substance, adapted to receive a telecommunication signal from a laser, in a prefixed wavelength range characterised by the fact that comprises a further doping substance, distributed along the fiber, said doping substance has an absorption for light having a wavelength less than 1,540 nm, substantially higher than the absorption that the same doping substance shows for a light having a wavelength varying from 1,540 nm to the superior limit of the predetermined wavelength range of the transmission signal. In a particularly preferred embodiment of the present invention the further doping substance is samarium, in the form of a trivalent cation.

The samarium concentration in the fiber with respect to the erbium concentration present in the fiber, expressed as a percentage by weight of the contained oxides is:

$$1 \leq \frac{[\, Sm_2O_3 \,]}{[\, Er_2O_3 \,]} \leq 10.$$

It is another object of the present invention an optical amplifier, in particular for optical fiber telecommunication lines operating with a transmission signal in a predetermined wavelength range, comprising a laser emitting active optical fiber doped with erbium, characterised by the fact that the active optical fiber contains a further doping substance, distributed along the fiber, said doping substance shows an absorption, for a light having a wavelength lower than 1,540 nm, but substantially higher than the absorption that the further doping substance shows for a light with a wavelength varying from 1,540 nm to the superior limit of the predetermined wavelength range of the transmission signal; preferably the further doping substance is samarium.

More details will become apparent from the following description of the invention made with reference to the accompanying drawings, in which:

- Fig. 1 is a diagram of an optical amplifier using an active fiber;
- Fig. 2 is a diagram of the energetic transitions of a fiber suitable for an amplifier according to the diagram in Fig. 1, which transitions are adapted to generate a stimulated (laser) emission;
- Fig. 3 is a diagram of the stimulated emission curve of a silica-based optical fiber, doped with $Al^{3+}$ and with $Er^{3+}$;
- Fig. 4 is a diagram of the stimulated emission curve of the optical fiber of fig. 1 doped with $Al^{3+}$ and with $Er^{3+}$ and with $Sm^{3+}$;
- Fig. 5 is a diagram of a light absorption of an optical silica fiber doped with $Al^{3+}$ with $Er^{3+}$ and with $Sm^{3+}$.

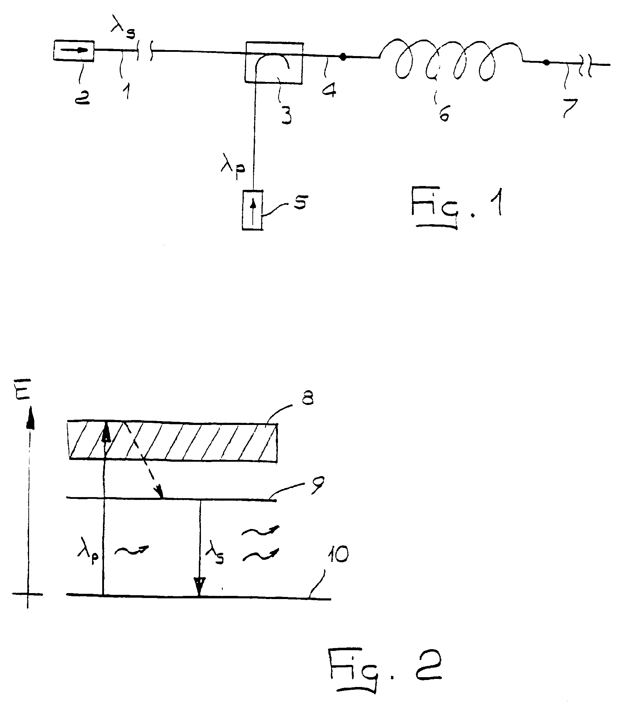

In order to amplify optical fiber telecommunication signals, fiber-made amplifier can be suitably used; the structure of these amplifiers is diagrammatically shown in Fig. 1, where reference 1 shows an optical telecommunication fiber, to which a transmission signal is sent which has a wavelength $\lambda_s$ and is generated by a signal emission laser 2; said signal which attenuates after a certain line length, is sent to a dichroic coupler 3 where it is joined on a sole outgoing fiber 4 with a pumping signal having a wavelength $\lambda_p$ and generated by a pumping laser emitter 5; an active fiber 6. connected to the fiber 4 coming out from the coupler, constitutes the signal amplifying element which is then introduced into the line fiber 7 in order to go on towards its destination.

For the accomplishment of the active fiber 6. constituting the amplifying element in the unit, it is convenient to use a silica-based optical fiber in a doped solution containing $Al_2O_3$ and $Er_2O_3$, of the kind, for example. described in the above mentioned British Patent Application n. 8813769 which allows an advantageous amplification of the transmission signal, to be achieved by exploiting the laser transitions of erbium.

As shown in the diagram in fig. 2 relating to a fiber of the specified type and symbolically showing the available energetic states for an erbium ion in solution in the fiber silica-based matrix, the introduction into the active fiber of a luminous power at the "pumping" wavelength $\lambda_p$ lower than the transmission signal wavelength $\lambda_s$, brings a certain number of $Er^{3+}$ ions present in the fiber glass matrix as doping substance to an "excited" energetic state 8, hereinafter referred to as "pumping" band, from which state ions spontaneously decay to an energetic level 9 constituting the laser emission level.

In the laser emission level 9, $Er^{3+}$ ions can stand for a relatively long time before undergoing a spontaneous transition up to a base level 10.

It is known that while the transition from band 8 to level 9 is associated with a thermal-type emission, which is dispersed to the outside of the fiber (phonon radiation), the transition from level 9 to the base level 10, generates a luminous emission at a wavelength corresponding to the energetic values of the laser emission level 9; if a fiber containing a high amount of ions at the laser emission level is passed through by a wavelength signal having a wavelength corresponding to such emission level, said signal causes the stimulated transition of the concerned ions from the emission state to the base state before the spontaneous decay thereof through a cascade phenomenon producing the emission of a greatly amplified transmission signal at the output of the active fiber.

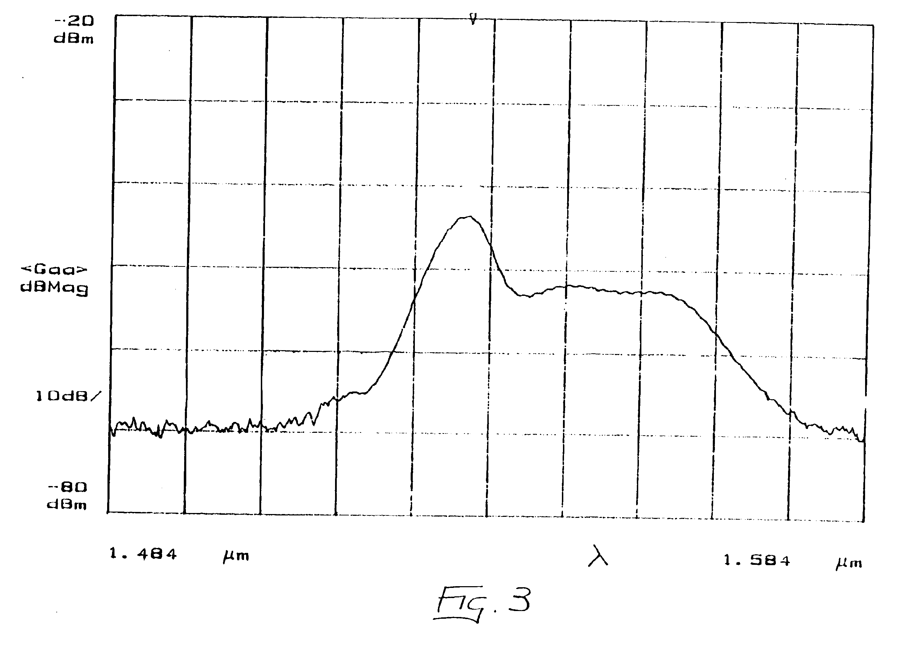

In the absence of the transmission signal the spontaneous decay from the laser emission states, which are a discrete number typical of each substance, gives rise to a luminosity having peaks at different frequencies corresponding to the available levels; in particular as shown in Fig. 3, a Si/Al fiber doped with $Er^{3+}$, adapted for use in optical amplifiers, at a 1,531 nm wavelength exhibits an emission peak of great intensity, whereas at higher wavelength, up to approximately 1,560 nm, there is an area in which the emission is still strong but the intensity is much lower.

In the presence of a luminous signal introduced into the fiber at the wavelength corresponding to the $Er^{3+}$ emission peak, at 1,531 nm, a very strong signal amplification occurs, whereas the background noise given by the spontaneous emission of the erbium keeps limited, which makes the fiber suitable for use in an optical amplifier for a signal of this wavelength.

The commercially available and conveniently to be used signal generation lasers of the semiconductor type (In, Ga, As) have a typical emission band in the range of 1.52 to 1.57 mm: this means that their production technique is unable to ensure the emission of the transmission signal at a precise frequency value corresponding to the emission peak of the erbium-doped fiber used as amplifier offering on the contrary a great percentage of produced pieces, in which the signal is localised in the areas of the fiber emission curve adjacent said emission peak.

The signal generated by said laser emitters could not be amplified reaching a sufficient gain in an $Er^{3+}$-doped optical fiber amplifier of the above described type, because the pumping power introduced into the active fiber would be mostly used to amplify the background noise generated inside the active fiber of the amplifier itself in correspondence to spontaneous emission of erbium at 1,531 nm wavelength.

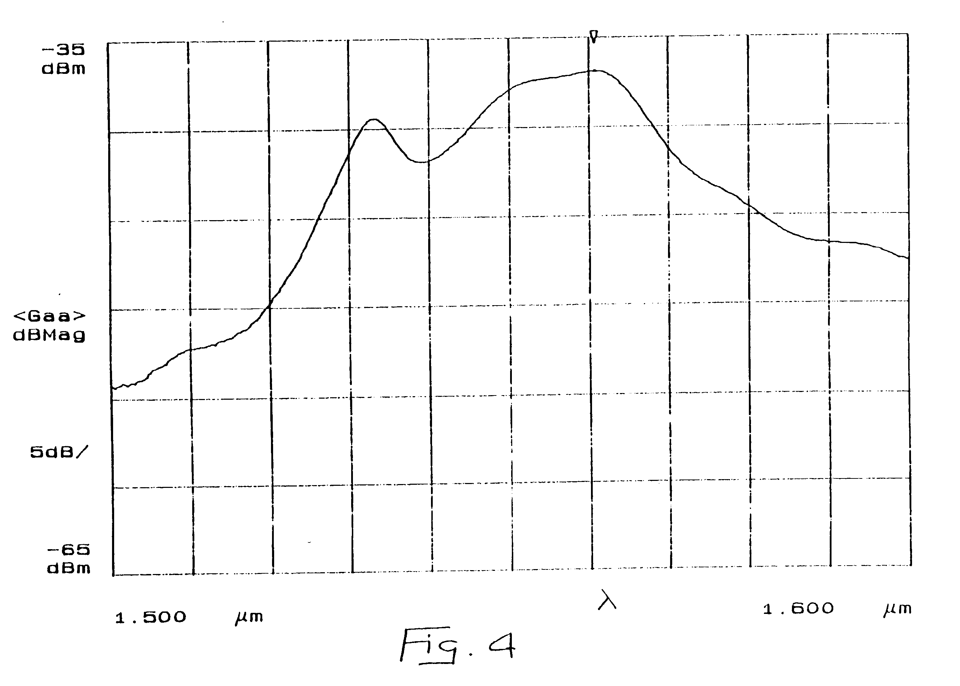

However, it has been observed that a fiber incorporating a samarium quantity ($Sm^{3+}$) as a further doping substance, together with $Er^{3+}$, shows a stimulated emission curve, in the wavelength range. of the type shown in fig. 4, without a peak localised at 1.531 nm of high intensity, showing, on the contrary, a high and almost constant value in a wide range, substantially between 1.530 and 1,560 nm.

This fiber could be also used in an optical amplifier, operating on a signal generated by commercially available laser emitters, because it is able to generate an amplifying effect with a satisfactory gain on a transmission signal in said wavelength range, without adding an unacceptable quantity of "noise".

By way of example, it has been built an amplifier according the diagram shown in figure 1, comprising an active fiber 6 of the "step index" Si/Al type doped with $Er^{3+}$ and with $Sm^{3+}$ containing 40 ppm by weight of $Er_2O_3$ and 60 ppm of $Sm_2O_3$.

The length of the active fiber is 30 meters.

It has been used a pumping laser emitter 5, an argon ion laser, operating at 528 nm, working with a power of 150 mW, while as a signal laser emitter 2 it has been used a commercially available laser of the semiconductor type (In, Ga, As) which had the power of 1 mW and the emission wavelength of which has been measured to 1,560 mm.

With said experimental configuration, downstream of the amplifier a gain of 27 dB has been achieved on an input signal of 1 mW.

In the absence of a signal, a spontaneous emission level of 10 μW has been measured downstream of the amplifier.

Such emission constituting the background noise produced by the amplifier, does not represent an important noise to the signal which is amplified to much higher level (about 250 μW).

For comparison, the same transmission laser emitter 2 has been used together with an amplifier having the same structure, as in the preceding example, but using an active fiber 6 of the "step index" Si/Al type, doped only with $Er^{3+}$, containing 40 ppm by weight of $Er^{3+}$; the active fiber was 30 meter long.

Said amplifier with a transmission signal at 1,560 nm wavelength has shown a gain lower than 15 dB, the spontaneous emission being of a level comparable to that of the output signal.

As can be seen from the above examples, while the amplifier of the second example has shown a reduced gain also introducing such a noise that the transmission signal reception was difficult, so that said amplifier was practically useless, the amplifier using an active fiber in accordance with the invention, as is apparent from the first mentioned example has proved its capability of supplying a high amplification gain together with a negligible introduced noise.

The obtained result is regarded as caused by the presence of samarium as a further doping substance in the active fiber, in fact samarium behaves as a wavelength emission absorber of erbium at 1,531 nm at the same time it does not substantially absorb light power at higher wavelength, "levelling" in this way the spectrum emission of the active fiber, so that it can effectively operate on transmission signals in a range sufficiently wide to accept the majority of commercially available semiconductor lasers (In, Ga, As).

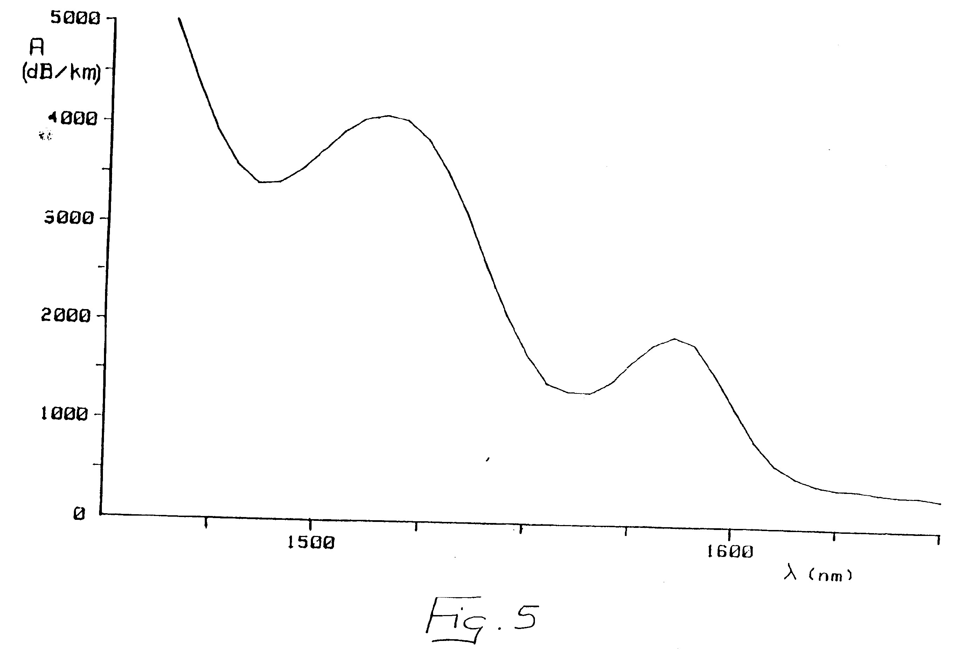

As illustrated in figure 5, that shows the absorption curve for unity of length of a Si/Al fiber doped with samarium, the samarium presence in the fiber causes, for wavelength substantially lower than 1,540 nm, an absorption much higher than the absorption shown between 1,540 and 1,560 nm; this means that samarium introduced in a fiber according to the present invention behaves as a "filter" distributed along the active fiber, absorbing photons emitted at 1,531 nm, as soon as photons are generated for a spontaneous decay of the laser emission level of the $Er^{3+}$ ions, avoiding in this way that they can move forward in the active fiber causing further decays for this wavelength, therefore subtracting pumping energy in the wavelength range adjacent the value of which the useful signal is sent and generating an amplified background noise.

The erbium quantity contained in the active fiber is chosen according to the desired gain for the used fiber length, that is the fiber length is selected according to the erbium quantity contained in the fiber in function of the desired gain; usually the erbium contained in the fiber, in the form of oxide ($Er_2O_3$), varies from 10 and 100 ppm by weight.

In correspondence to these erbium concentration values in the fiber, the samarium concentration by weight in the form of oxide ($Sm_2O_3$) in the fiber, is equal or preferably more than the erbium concentration, the range of the samarium concentration is given by

$$1 \leq \frac{[\,Sm_2O_3\,]}{[\,Er_2O_3\,]} \leq 10$$

The doping substances can be introduced in the fiber, for example, through the "solution doping" technique, that is well known in the art, that insures satisfactory qualitative results, or through other well known techniques, according to specific necessities.

Despite the fact the invention has been particularly described in relation to the use of samarium as doping substance in the active fiber, other doping substances can be used for the same object provided that they have a high luminous absorption corresponding to the erbium maximum spontaneous emission wavelength particularly about 1,531 nm, showing at the same time a luminous absorption considerably less for wavelength values higher than this wavelength, preferably higher than 1,540 nm for the whole wavelength range of tolerance of the commercially available signal laser emitters.

In order to not influence the amplifier pumping power requested to carry out the population inversion that causes the laser emission in the optical fiber, said pumping power being supplied to the fiber in the form of a luminous radiation with a wavelength less than the wavelength of the transmission signal, the doping substance to be added to erbium in the fiber cannot have, as samarium, a sensible luminous absorption at the pumping wavelength, that can preferably be 528 or 980 nm.

## Claims

1. Optical fiber (6) comprising laser emission doping substances, particularly to be used in fiber optical amplifiers for optical telecommunication lines (1,7), said optical fiber containing erbium as laser emission doping substance, adapted to receive a telecommunication transmission signal ($\lambda s$) from a laser emitter (2), in a prefixed predetermined wavelength range, characterised by the fact that said optical fiber comprises a further doping substance distributed along the fiber, said doping substance shows an absorption for a light having a wavelength lower than 1,540 nm, substantially higher than the absorption that said further doping substance shows for a light having a wavelength varying from 1,540 nm to the superior limit of said predetermined wavelength range of the transmission signal.

2. Optical fiber comprising laser emission doping substances according to claim 1, characterised by the fact that the further doping substance is samarium in the form of a trivalent cation.

3. Optical fiber comprising laser emission doping substances according to claim 2, characterised by the fact that the samarium concentration in the fiber, with respect to the erbium concentration in the same fiber, expressed as a percentage by weight of the contained oxides, is

$$1 \leq \frac{[\,Sm_2O_3\,]}{[\,Er_2O_3\,]} \leq 10.$$

4. Optical amplifier, particularly for optical fiber telecommunication lines (1,7) operating with a transmission signal ($\lambda s$) in a predetermined wavelength range, comprising a laser emission active optical fiber (6) doped with erbium, characterised by the fact that the active optical fiber contains a further doping substance distributed along the fiber, said doping substance shows an absorption, for a light wavelength less than 1,540 nm, substantially higher than the absorption that the further doping substance shows for a light wavelength varying from 1,540 nm to the superior limit of the said predetermined wavelength range of the transmission signal.

5. Optical amplifier according to claim 4, characterised by the fact that the active optical fiber further doping substance is formed by samarium in the form of a trivalent cation.

6. Optical amplifier according to claim 4, characterised by the fact that the samarium concentration in the active optical fiber with respect to the erbium concentration in the fiber, expressed as a percentage by weight of the oxides contained in the fiber is

$$1 \leqq \frac{[\,Sm_2O_3\,]}{[\,Er_2O_3\,]} \leqq 10.$$

## Patentansprüche

1. Laseremissions-Dotierungssubstanzen aufweisende optische Faser (6), die insbesondere in faseroptischen Verstärkern für optische Fernübertragungsleitungen (1,7) verwendet werden soll, wobei die optische Faser Erbium als Laseremissions-Dotierungssubstanz enthält und ein Fernübertragungssignal ($\lambda$s) von einem Laseremitter (2) in einem vorbestimmten Wellenlängenbereich empfangen kann, **dadurch gekennzeichnet**, daß die optische Faser eine weitere Dotierungssubstanz umfaßt, die entlang der Faser verteilt ist und eine Absorption für Licht einer Wellenlänge von kürzer als 1,540 nm zeigt, die wesentlich höher als die Absorption ist, welche die weitere Dotierungssubstanz für ein Licht einer Wellenlänge zeigt, die sich von 1,540 nm bis zur oberen Grenze des vorbestimmten Wellenbereichs des Übertragungssignals ändert.

2. Laseremissions-Dotierungssubstanzen aufweisende optische Faser nach Anspruch 1, dadurch gekennzeichnet, daß die weitere Dotierungssubstanz Samarium in Form eines dreiwertigen Kations ist.

3. Laseremissions-Dotierungssubstanzen aufweisende optische Faser nach Anspruch 2, dadurch gekennzeichnet, daß die Samariumkonzentration in der Faser mit Bezug auf die Erbiumkonzentration in der gleichen Faser, ausgedrückt als ein Gewichtsprozentsatz der enthaltenen Oxide

$$1 \leqq \frac{[Sm_2O_3]}{[Er_2O_3]} \leqq 10.$$

ist.

4. Optischer Verstärker, insbesondere für faseroptische Fernübertragungsleitungen (1,7), der mit einem Übertragungssignal ($\lambda$s) in einem vorbestimmten Wellenlängenbereich arbeitet, umfassend eine optische aktive Laseremissionsfaser (6), die mit Erbium dotiert ist, dadurch gekennzeichnet, daß die optische aktive Faser eine weitere Dotierungssubstanz enthält, die entlang der Faser verteilt ist und für eine Lichtwellenlänge von kürzer als 1,540 nm eine Absorptions zeigt, die wesentlich höher ist als die Absorption, welche die weitere Dotierungssubstanz für ein Licht zeigt, das eine Wellenlänge hat, die sich von 1,540 nm zu der oberen Grenze des vorbestimmten Wellenlängenbereichs des Übertragungssignals ändert.

5. Optischer Verstärker nach Anspruch 4, dadurch gekennzeichnet, daß die weitere Dotierungssubstanz der optischen aktive Faser durch Samarium in Form eines dreiwertigen Kations gebildet ist.

6. Optischer Verstärker nach Anspruch 4, dadurch gekennzeichnet, daß die Samariumkonzentration in der optischen aktive Faser mit Bezug auf die Erbiumkonzentration in der Faser, ausgedrückt als Gewichtsprozentsatz der in der Faser enthaltenen Oxide, wie folgt ist:

$$1 \leqq \frac{[Sm_2O_3]}{[Er_2O_3]} \leqq 10.$$

## Revendications

1. Fibre optique (6) comprenant des substances dopantes d'émission laser, à utiliser en particulier dans des amplificateurs optiques à fibres servant à des lignes (1, 7) de télécommunications optiques, ladite fibre optique contenant de l'erbium comme substance dopante d'émission laser, apte à recevoir d'un émetteur laser (2) un signal (s) de transmission de télécommunications dans une plage prédéterminée de longueurs d'ondes, caractérisée par le fait que ladite fibre optique comprend une autre substance dopante répartie le long de la fibre, ladite substance dopante présente, pour une lumière dont la longueur d'onde est inférieure à 1540 nm, une absorption sensiblement plus élevée que l'absorption que ladite autre substance dopante présente pour une lumière dont la longueur d'onde varie de 1540 nm jusqu'à la limite supérieure de ladite plage prédéterminée de longueurs d'ondes du signal de transmission.

2. Fibre optique comprenant des substances dopantes d'émission laser selon la revendication 1, caractérisée par le fait que l'autre substance dopante est du samarium sous forme d'un cation trivalent.

3. Fibre optique comprenant des substances dopantes d'émission laser selon la revendication 2, caractérisée par le fait que la concentration de samarium dans la fibre par rapport à la concentration en erbium dans la même fibre, exprimée en pourcentage en poids des oxydes contenus est

$$1 \leq \frac{[Sm_2O_3]}{[Er_2O_3]} \leq 10$$

4. Amplificateur optique particulièrement destiné à des lignes de télécommunication (1, 7) pour fibres optiques, fonctionnant avec un signal de transmission s dans une plage prédéterminée de longueurs d'ondes, comprenant une fibre optique active (6) d'émission laser dopée à l'erbium, caractérisé par le fait que ladite fibre optique comprend une autre substance dopante répartie le long de la fibre, ladite substance dopante présente, pour une lumière dont la longueur d'onde est inférieure à 1540 nm, une absorption sensiblement plus élevée que l'absorption que ladite autre substance dopante présente pour une longueur d'onde lumineuse qui varie de 1540 nm jusqu'à la limite supérieure de ladite plage prédéterminée de longueurs d'ondes du signal de transmission.

5. Amplificateur optique selon la revendication 4, caractérisée par le fait que l'autre substance de dopage de fibre optique active est formée de samarium sous forme d'un cation trivalent.

6. Amplificateur optique selon la revendication 4, caractérisé par le fait que la concentration de samarium dans la fibre optique active par rapport à la concentration en erbium dans la fibre, exprimée en pourcentage en poids des oxydes contenus dans la fibre est

$$1 \leq \frac{[Sm_2O_3]}{[Er_2O_3]} \leq 10$$

Fig. 1

Fig. 2

Fig. 3

EP 0 426 222 B1

Fig. 4

Fig. 5